# EUROPEAN PATENT APPLICATION

(11) **EP 4 692 228 A1**
(43) Date of publication of application: **11.02.2026**
(21) Application number: 24779611.3
(22) Date of filing: 15.03.2024
(51) Int. Cl.: C08L 45/00, C08K 3/013, C08K 3/22, C08K 3/34, C08K 7/00

(54) **RESIN COMPOSITION AND MOLDED BODY**

(30) Priority: 31.03.2023 JP 2023059371
(71) Applicant: Zeon Corporation, Tokyo 100-8246 (JP)
(72) Inventor: SATO, Ayumi, Tokyo 100-8246 (JP); CHIBA, Daido, Tokyo 100-8246 (JP)
(74) Representative: Maiwald GmbH
(86) International application number: PCT/JP2024/010372
(87) International publication number: WO 2024/203486

(57) **Abstract**

A resin composition contains a polymer including a structural unit derived from a norbornene-based monomer and a plate-like filler.

## Description

### TECHNICAL FIELD

The present disclosure relates to a resin composition and a shaped product.

### BACKGROUND

Fillers are conventionally compounded in resin compositions that serve as materials of shaped products with the aim of reinforcing and/or imparting various functions to such shaped products.

As one example, Patent Literature (PTL) 1 proposes a resin composition containing a resin and composite particles that are composed of two types of inorganic fine particles. According to PTL 1, by using this resin composition, it is possible to produce a shaped product having a low linear expansion coefficient.

### CITATION LIST

### Patent Literature

PTL 1: WO2010/137437A1

### SUMMARY

### (Technical Problem)

However, the conventional resin composition described above leaves room for improvement in terms of further improving dimensional stability with respect to heat (hereinafter, also referred to as "thermal dimensional stability") of a shaped product.

Accordingly, an object of the present disclosure is to provide a shaped product that has excellent dimensional stability with respect to heat and a resin composition that can form this shaped product.

### (Solution to Problem)

The inventors conducted diligent investigation with the aim of solving the problem set forth above. The inventors discovered that by using a resin composition that contains a polymer including a structural unit derived from a norbornene-based monomer (hereinafter, also referred to as a "norbornene-based polymer") and a plate-like filler, it is possible to form a shaped product having excellent thermal dimensional stability, and, in this manner, completed the present disclosure.

Specifically, the present disclosure is aimed at advantageously solving the problem set forth above, and, according to the present disclosure, resin compositions according to the following [1] to [6] and shaped products according to the following [7] to [12] are provided.
[1] A resin composition comprising: a polymer including a structural unit derived from a norbornene-based monomer; and a plate-like filler.

By using a resin composition that contains a norbornene-based polymer and a plate-like filler in this manner, it is possible to produce a shaped product having excellent thermal dimensional stability.

The term "norbornene-based monomer" as used in the present specification refers to a monomer that has a norbornene skeleton.

The term "plate-like filler" as used in the present specification refers to a filler that has two opposing main surfaces and that has an aspect ratio of 13 or more, as calculated as a ratio of the maximum diameter of the main surfaces relative to the thickness (distance between the two main surfaces). The "two main surfaces" are two surfaces having a large area among surfaces of the filler. Moreover, the shape of the two main surfaces of the plate-like filler (i.e., the plan-view shape of the plate-like filler) can be any shape. Furthermore, the two main surfaces may be flat surfaces or may be curved surfaces, and it is not necessary for the two main surfaces to each have the same shape.

The shapes of various types of fillers that are referred to in the present specification can be observed using an electron microscope.

[2] The resin composition according to the foregoing [1], wherein the plate-like filler is at least one of boehmite and mica.

When boehmite and/or mica is used as the plate-like filler, thermal dimensional stability of an obtained shaped product can be further improved.

[3] The resin composition according to the foregoing [1], wherein the plate-like filler is boehmite.

When boehmite is used as the plate-like filler, thermal dimensional stability of an obtained shaped product can be even further improved.

[4] The resin composition according to any one of the foregoing [1] to [3], wherein content of the plate-like filler is not less than 10 parts by mass and not more than 60 parts by mass per 100 parts by mass of the polymer.

By using a resin composition in which the content of a plate-like filler is within the range set forth above, thermal dimensional stability of an obtained shaped product can be further improved. Moreover, in production of a shaped product by injection molding, the formation of a weak weld at a section where there is confluence of molten resin inside of a mold can be inhibited.

[5] The resin composition according to any one of the foregoing [1] to [4], further comprising a particulate filler.

By using a resin composition that contains a particulate filler in addition to a norbornene-based polymer and a plate-like filler, fluidity of the resin composition can be increased, and the formation of a weld during production of a shaped product can be inhibited.

[6] The resin composition according to the foregoing [5], wherein a ratio of an average particle diameter of the particulate filler relative to an average particle diameter of the plate-like filler is 1/10 or less.

When a ratio of average particle diameter of particulate filler/average particle diameter of plate-like filler is not more than the value set forth above, fluidity of the resin composition can be further increased, and the formation of a weld during production of a shaped product can be even further inhibited.

Note that the "average particle diameter" of a plate-like filler and a particulate filler referred to in the present specification means the arithmetic mean diameter determined through observation using an electron microscope, and, in more detail, can be measured by a method described in the EXAMPLES section.

[7] A shaped product obtained through shaping of the resin composition according to any one of the foregoing [1] to [6].

A shaped product that is obtained through shaping of any one of the resin compositions set forth above has excellent thermal dimensional stability.

[8] The shaped product according to the foregoing [7], wherein an MD linear expansion coefficient and a TD linear expansion coefficient of the shaped product are each 40 ppm/K or less.

A shaped product for which an MD linear expansion coefficient and a TD linear expansion coefficient are each not more than the value set forth above is preferable since it can be said to have especially good thermal stability.

Note that MD (machine direction) referred to in the present specification means a direction that is parallel to the flow of a resin composition during production of a shaped product, whereas TD (transverse direction) referred to in the present specification means a direction that is perpendicular to MD. Note that MD and TD can be defined through observation of a shaped product itself. For example, in a case in which a gate mark is confirmed in a shaped product having a roughly rectangular shape in plan-view, the extension direction of a side where the gate mark is present in plan-view of the shaped product can be defined as TD, and a direction that is perpendicular to TD can be defined as MD. Moreover, in a case in which a gate mark is confirmed in a shaped product having a roughly circular shape (lens shape, etc.), a tangential direction to the rough circle at the center of the gate mark in plan-view of the shaped product can be defined as TD, and a direction that is perpendicular to TD can be defined as MD.

The "linear expansion coefficients" in MD and TD referred to in relation to a shaped product in the present specification can be measured by a method described in the EXAMPLES section.

[9] The shaped product according to the foregoing [7] or [8], wherein a ratio of an MD linear expansion coefficient relative to a TD linear expansion coefficient of the shaped product is not less than 0.8 and not more than 1.2.

A shaped product for which a ratio of MD linear expansion coefficient/TD linear expansion coefficient is within the range set forth above is preferable since it has little anisotropy of thermal dimensional stability.

[10] The shaped product according to any one of the foregoing [7] to [9], wherein water absorption of the shaped product after 24 hours of immersion in 23°C water as measured in accordance with ASTM D570 is 0.05 mass% or less.

A shaped product for which the water absorption described above is not more than the value set forth above is preferable since it has excellent water absorption resistance.

[11] The shaped product according to any one of the foregoing [7] to [10], wherein the shaped product has an arithmetic surface roughness Ra of 10 nm or less.

A shaped product having an arithmetic surface roughness Ra that is not more than the value set forth above is preferable since it has excellent surface smoothness.

The "arithmetic surface roughness Ra" of a shaped product referred to in the present specification can be measured by a method described in the EXAMPLES section.

[12] The shaped product according to any one of the foregoing [7] to [11], wherein the shaped product is for a mirror.

### (Advantageous Effect)

According to the present disclosure, it is possible to provide a resin composition that can form a shaped product having excellent thermal dimensional stability. Moreover, according to the present disclosure, it is possible to provide a shaped product that has excellent thermal dimensional stability.

### DETAILED DESCRIPTION

The following provides a detailed description of embodiments of the present disclosure.

A presently disclosed resin composition can be used in production of a presently disclosed shaped product. Moreover, the presently disclosed shaped product can be used as a mirror that is incorporated into a projector, a head-up display, or the like, but is not specifically limited thereto.

### (Resin composition)

The presently disclosed resin composition is required to contain a norbornene-based polymer and a plate-like filler and may contain optional components as necessary.

As a result of the presently disclosed resin composition containing the norbornene-based polymer and the plate-like filler, the resin composition can be used to produce a shaped product having excellent thermal dimensional stability.

### <Norbornene-based polymer>

The norbornene-based polymer is a polymer obtained through polymerization of a norbornene-based monomer that is a monomer having a norbornene skeleton or is a hydrogenated product of such a polymer.

The norbornene-based polymer may be a ring-opened polymer of a norbornene-based monomer, a ring-opened polymer of a norbornene-based monomer and another monomer that can be ring-opening copolymerized therewith, a hydrogenated product of either of these ring-opened polymers, an addition polymer of a norbornene-based monomer, an addition polymer of a norbornene-based monomer and another monomer that can be copolymerized therewith, or the like. Note that one norbornene-based polymer can be used individually, or two or more norbornene-based polymers can be used in combination.

The norbornene-based monomer may be bicyclo[2.2.1]hept-2-ene (commonly referred to as norbornene) or a derivative thereof (derivative having a substituent on a ring), tricyclo[4.3.0^{1,6}.1^{2,5} ]deca-3,7-diene (commonly referred to as dicyclopentadiene) or a derivative thereof (derivative having a substituent on a ring), tetracyclo[9.2.1.0^{2,10}.0^{3,8}]tetradeca-3,5,7,12-tetraene (also referred to as methanotetrahydrofluorene or 1,4-methano-1,4,4a,9a-tetrahydrofluorene) or a derivative thereof (derivative having a substituent on a ring), tetracyclo[4.4.1^{2,5}.1^{7,10}.0]dodec-3-ene (commonly referred to as tetracyclododecene) or a derivative thereof (derivative having a substituent on a ring), or the like.

The substituent may be an alkyl group, an alkylene group, a vinyl group, an alkoxycarbonyl group, an alkylidene group, or the like.

Examples of norbornene-based monomers that have a substituent include 8-methoxycarbonyl-tetracyclo[4.4.0.1^{2,5}.1^{7,10}]dodec-3-ene, 8-methyl-8-methoxycarbonyl-tetracyclo[4.4.0.1^{2,5} 1^{7,10}]dodec-3-ene, 8-ethylidene-tetracyclo[4.4.0.1^{2,5}.1^{7,10}]dodec-3-ene, and so forth, but are not limited thereto.

The other monomer that can be ring opening copolymerized with the norbornene-based monomer may be a monocyclic cycloolefin-based monomer such as cyclohexene, cycloheptene, cyclooctene, or a derivative of any thereof (derivative having a substituent on a ring), for example. Examples of such substituents include the same examples as given for a substituent of the norbornene-based monomer.

The other monomer that can be addition copolymerized with the norbornene-based monomer may be an α-olefin having a carbon number of 2 to 20 such as ethylene, propylene, 1-butene, 1-pentene, or 1-hexene or a derivative of any thereof (derivative having a substituent); a cycloolefin such as cyclobutene, cyclopentene, cyclohexene, or cyclooctene or a derivative of any thereof (derivative having a substituent on a ring); a non-conjugated diene such as 1,4-hexadiene, 4-methyl-1,4-hexadiene, 5-methyl-1,4-hexadiene, or 1,7-octadiene; or the like. Of these monomers, α-olefins are preferable, and ethylene is particularly preferable. Examples of such substituents include the same examples as given for a substituent of the norbornene-based monomer.

The ring-opened polymer of a norbornene-based monomer or the ring-opened polymer of a norbornene-based monomer and another monomer that can be ring-opening copolymerized therewith can be synthesized through polymerization of the monomer component(s) in the presence of a commonly known ring-opening polymerization catalyst.

The ring-opening polymerization catalyst may be a catalyst formed of a halide of a metal such as ruthenium or osmium, a nitric acid salt or acetylacetone compound, and a reductant or a catalyst formed of a halide of a metal such as titanium, zirconium, tungsten, or molybdenum or an acetylacetone compound and an organoaluminum compound.

The hydrogenated ring-opened polymer of a norbornene-based monomer can normally be obtained by adding a commonly known hydrogenation catalyst containing a transition metal such as nickel or palladium to a polymerization solution of the ring-opened polymer described above and hydrogenating carbon-carbon unsaturated bonds.

Note that the hydrogenation rate is preferably 90% or more, more preferably 95% or more, and even more preferably 99% or more.

The "hydrogenation rate" referred to in the present specification can be measured by a method described in the EXAMPLES section.

The addition polymer of a norbornene-based monomer or the addition polymer of a norbornene-based monomer and another monomer that can be copolymerized therewith can be synthesized through polymerization of the monomer component(s) in the presence of a commonly known addition polymerization catalyst. The addition polymerization catalyst may be a catalyst that is formed of a titanium, zirconium, or vanadium compound and an organoaluminum compound, for example.

From a viewpoint of further improving thermal dimensional stability of an obtained shaped product, the proportion constituted by norbornene-derived structural units included in the norbornene-based polymer when all structural units included in the norbornene-based polymer are taken to be 100 mass% is preferably not less than 50 mass% and not more than 100 mass%, more preferably not less than 60 mass% and not more than 100 mass%, and even more preferably not less than 70 mass% and not more than 100 mass%.

The weight-average molecular weight (Mw) of the norbornene-based polymer is not specifically limited but is preferably 1,000 or more, more preferably 2,000 or more, even more preferably 10,000 or more, and particularly preferably 20,000 or more, and is preferably 1,000,000 or less, and more preferably 500,000 or less.

Moreover, the molecular weight distribution (Mw/Mn) of the norbornene-based polymer is not specifically limited but is preferably not less than 1.0 and not more than 4.0, and more preferably not less than 1.5 and not more than 3.5.

The "weight-average molecular weight (Mw)" and "number-average molecular weight (Mn)" of a polymer such as a norbornene-based polymer referred to in the present specification can be measured by a method described in the EXAMPLES section.

### <Plate-like filler>

The plate-like filler is a filler having an aspect ratio of 13 or more as previously described.

The average aspect ratio of the plate-like filler is preferably 16 or more, and more preferably 20 or more, and is preferably 80 or less, more preferably 75 or less, even more preferably 60 or less, further preferably 45 or less, and particularly preferably 30 or less. When the average aspect ratio of the plate-like filler is within any of the ranges set forth above, thermal dimensional stability of an obtained shaped product can be further improved.

Note that the "average aspect ratio" of a plate-like filler referred to in the present specification means the arithmetic mean aspect ratio determined through observation using an electron microscope, and, in more detail, can be measured by a method described in the EXAMPLES section.

The average particle diameter of the plate-like filler is preferably 1 µm or more, and more preferably 2 µm or more, and is preferably 30 µm or less, more preferably 20 µm or less, and even more preferably 10 µm or less. When the average particle diameter of the plate-like filler is within any of the ranges set forth above, thermal dimensional stability of an obtained shaped product can be further improved.

The plan-view shape of the plate-like filler is not specifically limited as previously described. The plan-view shape of the plate-like filler may, for example, be a polygonal shape, a circular shape, an elliptical shape, or a shape that is approximated by any of these shapes.

The plate-like filler preferably has a plan-view shape that is hexagonal. It is sufficient for the plan-view shape that is hexagonal to be a roughly hexagonal shape that is recognized as having 6 angles without limitation to a regular hexagon, and so long as the degree of anisotropy is small, the lengths of sides joining angles may differ slightly, or one or more of these sides may be a curve, for example.

From a viewpoint of improving thermal dimensional stability of an obtained shaped product, the plate-like filler is preferably boehmite or mica, for example, and is more preferably boehmite. One of these plate-like fillers can be used individually, or two or more of these plate-like fillers can be used in combination.

Note that from a viewpoint of granulation shape retention, it is preferable to use a product obtained through granulation treatment of a binder resin with boehmite by molding and solidification. The binder resin that is used in the granulation treatment is preferably a polyacrylic acid-based resin or a stearic acid-based resin.

The content of the plate-like filler in the presently disclosed resin composition is preferably 10 parts by mass or more, more preferably 20 parts by mass or more, even more preferably 30 parts by mass or more, and particularly preferably 40 parts by mass or more per 100 parts by mass of the norbornene-based polymer, and is preferably 60 parts by mass or less, more preferably 55 parts by mass or less, and even more preferably 50 parts by mass or less per 100 parts by mass of the norbornene-based polymer. When the content of the plate-like filler is 10 parts by mass or more per 100 parts by mass of the norbornene-based polymer, thermal dimensional stability of an obtained shaped product can be further improved. On the other hand, when the content of the plate-like filler is 60 parts by mass or less per 100 parts by mass of the norbornene-based polymer, the formation of a weld during production of a shaped product can be inhibited.

### <Optional components>

Examples of components that may optionally be contained in the resin composition in addition to the norbornene-based polymer and the plate-like filler include other additives such as fillers that do not correspond to the plate-like filler described above (other fillers), antioxidants, anti-moisture agents, mold release agents, flame retardants, antibacterial agents, wood flour, coupling agents, plasticizers, colorants, lubricants, silicone oil, foaming agents, surfactants, thermoplastic elastomers, infrared absorbers, and light stabilizers. One of these other components may be used individually, or two or more of these other components may be used in combination.

Note that another filler can have any form such as a particulate form or a needle form without any specific limitations so long as it is a form other than a plate form.

From a viewpoint of inhibiting the formation of a weld during production of a shaped product, it is preferable that the resin composition contains a particulate filler.

The term "particulate filler" as used in the present specification refers to a filler having an aspect ratio of less than 13, as calculated as a ratio of maximum diameter relative to minimum diameter.

The average aspect ratio of the particulate filler is preferably 5 or less, more preferably 3 or less, and even more preferably 2 or less. When the aspect ratio of the particulate filler is not more than any of the values set forth above, weld formation in a shaped product can be further inhibited. The aspect ratio of the particulate filler is 1 or more, and may be more than 1.

The "average aspect ratio" of a particulate filler referred to in the present specification means the arithmetic mean aspect ratio determined through observation using an electron microscope, and, in more detail, can be measured by a method described in the EXAMPLES section.

Carbon-based particulate fillers and non-carbon-based particulate fillers can be used without any specific limitations as the particulate filler.

Examples of carbon-based particulate fillers include graphite such as artificial graphite, scaled graphite, flaked graphite, natural graphite, acid-treated graphite, expandable graphite, and expanded graphite; carbon black; and so forth.

Examples of non-carbon-based particulate fillers include titanium oxide, alumina, talc, calcium carbonate, zinc oxide, and so forth.

One of these particulate fillers can be used individually, or two or more of these particulate fillers can be used in combination.

Of the examples described above, carbon black and titanium oxide are preferable as the particulate filler from a viewpoint of sufficiently inhibiting the formation of a weld during production of a shaped product, and carbon black is more preferable. Carbon black is also useful when producing a shaped product that is colored black.

From a viewpoint of sufficiently inhibiting the formation of a weld during production of a shaped product, the average particle diameter of the particulate filler is preferably 0.01 µm or more, and more preferably 0.015 µm or more, and is preferably 0.1 µm or less, more preferably 0.08 µm or less, and even more preferably 0.07 µm or less.

The content of the particulate filler in the presently disclosed resin composition is not specifically limited and may be not less than 0 parts by mass and not more than 0.6 parts by mass per 100 parts by mass of the norbornene-based polymer, for example. Note that from a viewpoint of sufficiently obtaining the effect of inhibiting weld formation described above, the content of the particulate filler in the resin composition is preferably 0.05 parts by mass or more, and more preferably 0.3 parts by mass or more per 100 parts by mass of the norbornene-based polymer.

### <Production method of resin composition>

The presently disclosed resin composition can be produced by a method that enables good mixing of the norbornene-based polymer and the plate-like filler described above that are essentially contained components and also optional components that are used as necessary, for example, without any specific limitations. Examples of such a method include a method in which a mixture of the above-described components is supplied into a melt-kneader, the norbornene-based polymer is placed in a molten state, and kneading is performed. Note that the resultant resin composition may be shaped into the form of pellets or the like by any method.

The kneading can be performed using a melt-kneader such as a single-screw extruder, a twin-screw extruder, a Banbury mixer, a kneader, a roll, or a Feeder Ruder, for example. The kneading temperature is preferably 200°C or higher, and more preferably 240°C or higher, and is preferably 400°C or lower, and more preferably 300°C or lower. Moreover, in the kneading, the components may be kneaded all at once, or the components may be kneaded while being added over multiple additions.

### (Shaped product)

The presently disclosed shaped product is obtained through shaping of the presently disclosed resin composition set forth above. In other words, a norbornene-based polymer, a plate-like filler, and optional components used as necessary that are contained in the presently disclosed shaped product are those that were previously described in the "Resin composition" section. Moreover, the relationship (content ratio) of contents of the norbornene-based polymer, the plate-like filler, and the optional components that are contained in the presently disclosed shaped product and also attributes thereof are normally the same as the relationship (content ratio) of contents and the attributes thereof in the resin composition.

Furthermore, the presently disclosed shaped product has excellent thermal dimensional stability as a result of being formed from the presently disclosed resin composition set forth above.

The shaping method by which the presently disclosed shaped product is produced can be selected as appropriate from known shaping methods according to the desired shape of the shaped product without any specific limitations. Examples of such known shaping methods include extrusion molding, injection molding, inflation molding, blow molding, extrusion blow molding, injection blow molding, press forming, vacuum forming, powder slush molding, calendering, foam molding, and thermoforming. Of these examples, it is preferable to use injection molding as the shaping method.

In this shaping, it is possible to adopt a technique that involves setting the temperature of an inner surface of a mold cavity at the time of loading to a temperature at which the resin composition can undergo plastic deformation, initiating cooling at a timing from completion of loading to completion of pressure holding, and removing a product after sufficient cooling (heat and cool molding). By performing heat and cool molding, it is possible to reduce the arithmetic surface roughness Ra of the shaped product while also inhibiting weld formation.

### <Properties of shaped product>

The presently disclosed shaped product can have any shape in accordance with the application thereof. Moreover, the presently disclosed shaped product can have the following properties, for example.

### <<Linear expansion coefficient>>

TD and MD linear expansion coefficients of the shaped product are each preferably 40 ppm/K or less, more preferably 37 ppm/K or less, even more preferably 33 ppm/K or less, further preferably 30 ppm/K or less, and particularly preferably 25 ppm/K or less. A shaped product for which MD and TD linear expansion coefficients are each not more than any of the values set forth above is preferable since it can be said to have especially good thermal stability. Note that the lower limit for the TD and MD linear expansion coefficients is not specifically limited and may be 1 ppm/K or more, for example.

A ratio of the MD linear expansion coefficient relative to the TD linear expansion coefficient of the shaped product is preferably 0.80 or more, and more preferably 0.85 or more, and is preferably 1.20 or less, and more preferably 1.10 or less. A shaped product for which a ratio of MD linear expansion coefficient/TD linear expansion coefficient is within any of the ranges set forth above is preferable since it has little anisotropy of thermal dimensional stability.

### <<Water absorption>>

The norbornene-based polymer contained in the resin composition that is used to produce the shaped product has excellent hydrophobicity, which results in the shaped product having good water absorption resistance. The water absorption of the presently disclosed shaped product after 24 hours of immersion in 23°C water as measured in accordance with ASTM D570 is preferably 0.05 mass% or less, more preferably 0.03 mass% or less, and even more preferably 0.01 mass% or less. Note that the lower limit for the water absorption is not specifically limited and may be 0.001 mass% or more, for example.

### <<Arithmetic surface roughness Ra>>

The arithmetic surface roughness Ra of the shaped product is preferably 10 nm or less, and more preferably 8 nm or less. A shaped product having an arithmetic surface roughness Ra that is not more than any of the values set forth above is preferable since it has excellent surface smoothness. Note that the lower limit for the arithmetic surface roughness Ra is not specifically limited and may be 1 nm or more, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the examples and comparative examples, the following methods were used to measure or evaluate the hydrogenation rate, molecular weight, and glass-transition temperature of a norbornene-based polymer, the properties of a plate-like filler, the average particle diameter of a particulate filler, and the linear expansion coefficient, water absorption, presence of weld formation, and arithmetic surface roughness Ra of a shaped product.

### <Hydrogenation rate>

The hydrogenation rate in a hydrogenation reaction was calculated through ¹H-NMR measurement performed using deuterated chloroform as a solvent.

### <Molecular weight>

The number-average molecular weight (Mn) and weight-average molecular weight (Mw) were measured as standard polyisoprene-equivalent values by gel permeation chromatography (GPC) with cyclohexane as a solvent. In addition, the molecular weight distribution (Mw/Mn) was calculated from these obtained values.

The GPC was performed using an HLC8120GPC produced by Tosoh Corporation.

The standard polyisoprene was standard polyisoprene produced by Tosoh Corporation for a total of 10 points corresponding to Mw = 602, 1,390, 3,920, 8,050, 13,800, 22,700, 58,800, 71,300, 109,000, and 280,000.

The measurement was performed using three columns connected in series (TSKgelG5000HXL, TSKgelG4000HXL, and TSKgelG2000HXL produced by Tosoh Corporation) as a column and under conditions of a flow rate of 1.0 mL/min, a sample injection volume of 100 µL, and a column temperature of 40°C.

### <Glass-transition temperature>

The glass-transition temperature (Tg) was measured based on JIS K6911 under a condition of a heating rate of 10°C/min using a differential scanning calorimeter (DSC6220 produced by SII NanoTechnology Inc.).

### <Properties of plate-like filler>

A resin composition produced in each example or comparative example was combusted at 550°C so as to remove a resin component. Thereafter, a solvent was added to the resultant ash content, a filler component was extracted, and then the extract was applied onto the surface of a substrate for observation in order to place the filler component in an observable state. Next, properties such as aspect ratio were confirmed using a scanning electron microscope (SEM) in order to determine whether or not each type of filler component was plate-like. For each of 50 randomly selected particles of a plate-like filler, the maximum diameter and thickness thereof were measured, and the aspect ratio was calculated. An arithmetic mean value of the maximum diameters of the 50 particles of the plate-like filler was taken to be the average particle diameter, and an arithmetic mean value of the aspect ratios of the 50 particles of the plate-like filler was taken to be the average aspect ratio.

### <Average particle diameter of particulate filler>

A resin composition produced in each example or comparative example was combusted at 550°C so as to remove a resin component. Thereafter, a solvent was added to the resultant ash content, a particulate filler was extracted, and then the extract was applied onto the surface of a substrate for observation in order to place individual particles of the particulate filler in an observable state. The particle diameters of 50 randomly selected particles of the particulate filler were individually observed using a scanning electron microscope (SEM), a flat surface measurement tool was used to draw a circle with respect to an obtained image of each particle of the particulate filler, and a maximum value and a minimum value for the diameter of the drawn circle were measured by straight line measurement. An arithmetic mean value of the maximum value and the minimum value of the diameter was taken to be the particle diameter of the particulate filler, and an average value of the particle diameters of the 50 particles of the particulate filler was taken to be the average particle diameter of the particulate filler.

### <Linear expansion coefficient>

A test specimen of 10 cm in length by 5 cm in width by 5 mm in thickness was cut out from a shaped product produced in each example or comparative example such that the length of 10 cm corresponded to TD, and then the linear expansion coefficient (ppm/K) stipulated in ASTM E831 was measured. This measurement was performed three times in total, and an average value of these measurements was taken to be the TD linear expansion coefficient.

A test specimen of 10 cm in length by 5 cm in width by 5 mm in thickness was cut out from a shaped product produced in each example or comparative example such that the length of 10 cm corresponded to MD, and then the linear expansion coefficient (ppm/K) stipulated in ASTM E831 was measured. This measurement was performed three times in total, and an average value of these measurements was taken to be the MD linear expansion coefficient.

In addition, a ratio of the MD linear expansion coefficient relative to the TD linear expansion coefficient was calculated.

### <Water absorption>

The water absorption after 24 hours of immersion in 23°C water was measured in accordance with ASTM D570 for a shaped product produced in each example or comparative example.

### <Presence of weld formation>

A shaped product produced in each example or comparative example was visually checked in order to judge whether or not a weld had formed.

### <Arithmetic surface roughness Ra>

A 3D optical profiler (NewView^{®} (NewView is a registered trademark in Japan, other countries, or both) series produced by Zygo Corporation) was used to measure the arithmetic surface roughness Ra of a shaped product produced in each example or comparative example. The measurement magnification was adjusted such that the measurement viewing field was 1.82 mm × 1.36 mm, five arbitrary positions near the center of the measurement sample were measured, and an average value of these measurements was taken to be the arithmetic surface roughness Ra. An evaluation was made by the following standard. Note that in a case in which the four corners in a measurement result 3D image were not flat (i.e., irregularities were larger than in a central section), that result was excluded when determining the average value. Moreover, analysis was performed in Cylinder Mode in order to correct large undulation of the surface.
A+: Arithmetic surface roughness Ra of 10 nm or less
A: Arithmetic surface roughness Ra of more than 10 nm

### (Preparation of norbornene-based polymers, etc.)

### <Synthesis of polymer X>

A polymerization reactor that had been internally dried and purged with nitrogen was charged with 7 parts (1% relative to total amount of monomer used in polymerization) of a monomer mixture composed of 70% methanotetrahydrofluorene (MTF), 22% tetracyclododecene (TCD), and 8% norbornene (NB) as norbornene-based monomers, 1,600 parts of dehydrated cyclohexane, 0.6 parts of 1-hexene, 1.3 parts of diisopropyl ether, 0.33 parts of isobutyl alcohol, 0.84 parts of triisobutylaluminum, and 30 parts of a 0.66% cyclohexane solution of tungsten hexachloride, and these materials were stirred at 55°C for 10 minutes.

Next, the reaction system was held at 55°C and was stirred while 693 parts of the aforementioned monomer mixture and 72 parts by mass of a 0.77 % cyclohexane solution of tungsten hexachloride were each continuously added dropwise into the polymerization reactor over 150 minutes. The polymerization reactor was further stirred for 30 minutes once the dropwise addition was complete, and then 1.0 parts of isopropyl alcohol was added to end the polymerization reaction. The conversion rate of monomers to polymer was determined to be 100% upon measurement of the polymerization reaction solution by gas chromatography.

Next, 300 parts of the polymerization reaction solution containing the polymer was transferred to an autoclave equipped with a stirrer, and then 100 parts of cyclohexane and 2.0 parts of nickel catalyst supported on diatomaceous earth (T8400RL produced by JGC Catalysts and Chemicals Ltd.; supported nickel content: 58%) were added. The inside of the autoclave was purged with hydrogen, and a reaction was subsequently carried out at 180°C with a hydrogen pressure of 4.5 MPa for 6 hours.

Once the hydrogenation reaction had ended, a pressurized filter (FUNDA Filter produced by IHI Corporation) with diatomaceous earth (Radiolite^{®} #500 (Radiolite is a registered trademark in Japan, other countries, or both) produced by Showa Chemical Industry Co., Ltd.) as a filter bed was used to perform pressurized filtration at a pressure of 0.25 MPa to obtain a colorless transparent solution.

Next, 0.5 parts of pentaerythritol tetrakis[3-(3,5-di-t-butyl-4-hydroxyphenyl)propionate] (Irganox^{®} 1010 (Irganox is a registered trademark in Japan, other countries, or both) produced by Ciba Specialty Chemicals) as an antioxidant was added and dissolved in the obtained solution per 100 parts of the hydrogenated product.

This solution was filtered using a filter (Zeta Plus^{®} 30H (Zeta Plus is a registered trademark in Japan, other countries, or both) produced by CUNO Inc.; pore diameter: 0.5 µm to 1 µm), and the filtrate was then filtered using a metal fiber filter (produced by Nichidai Corporation; pore diameter: 0.4 µm) so as to remove foreign substances.

Next, cyclohexane serving as a solvent and other volatile components were removed from the filtrate obtained as described above at a temperature of 260°C and a pressure of 1 kPa or lower using a cylindrical evaporator (produced by Hitachi, Ltd.). The residue was extruded as strands in a molten state from a die directly connected to the evaporator, was water cooled, and was subsequently cut by a pelletizer (OSP-2 produced by Osada Seisakusho) to yield pellets of a polymer X that was a norbornene-based polymer.

This polymer X had an Mw of 24,000, Mw/Mn of 1.75, hydrogenation rate of 99.9%, and Tg of 140°C.

### <Synthesis of polymer Y>

A polymerization reactor that had been internally dried and purged with nitrogen was charged with 960 parts of toluene, 220 parts of tetracyclododecene as a norbornene-based monomer, and 0.166 parts of 1-hexene. These materials were stirred at a rotation speed of 300 rpm to 350 rpm while being heated to a solvent temperature of 40°C.

Meanwhile, a catalyst solution was obtained in a glass vessel by mixing 23.5 parts of toluene, 0.044 parts of rac-ethylenebis(1-indenyl)zirconium dichloride, and 6.22 parts of a 9.0% toluene solution of methylaluminoxane (TMAO-200 series produced by Tosoh Finechem Corporation).

Once the solvent temperature in the reactor had reached 40°C, the catalyst solution as added into the reactor, 0.08 MPa ethylene gas was fed into the liquid phase promptly thereafter, and polymerization was initiated. With regards to the position of an ethylene spout, a ratio (B)/(A) of the distance (A) between the bottom of the reactor and the liquid surface and the distance (B) between the ethylene spout and the liquid surface is 0.60. Ethylene gas was automatically supplied as ethylene gas was consumed such that the pressure of ethylene gas was kept constant. Once 30 minutes had passed, feeding of ethylene gas was stopped, the reactor was depressurized, and 5 parts of methanol was added to end the polymerization reaction.

The resultant reaction solution was filtered using Radiolite #800 and was then poured into isopropanol containing 0.05% of hydrochloric acid to cause precipitation of polymer. The precipitated polymer was collected, washed, and then dried under reduced pressure at 100°C for 15 hours.

The resultant polymer Y (norbornene-based polymer) had an Mw of 56,000, Mw/Mn of 2.6, and Tg of 145°C.

### <Synthesis of polymer Z>

A mixed monomer was produced by sealing 76 parts of styrene and 4 parts of isoprene in a pressure-resistant vessel made of stainless steel that had been internally dried and purged with nitrogen and performing stirring thereof. Next, an autoclave made of stainless steel that had been dried and purged with nitrogen and that included a magnetic stirring device was charged with 320 parts of dehydrated cyclohexane, 4 parts of the mixed monomer produced as described above, and 0.1 parts of dibutyl ether. These materials were stirred at 50°C while 0.18 parts of a hexane solution of n-butyllithium (concentration 15%) was added into the autoclave to initiate polymerization. Once 0.5 hours had passed from the start of the reaction (conversion rate of 96% at this point), 76 parts of the mixed monomer was continuously added to the polymerization reaction solution over 1 hour to continue the polymerization reaction. Once a further 0.5 hours had passed from the end of addition (conversion rate of 95% at this point), 0.1 parts of isopropyl alcohol was added to end the polymerization reaction and yield a reaction solution containing a styreneisoprene copolymer. Next, 8 parts of a stabilized nickel hydrogenation catalyst E19Z (nickel/diatomaceous earth-based hydrogenation catalyst (nickel content: 60%) produced by JGC Catalysts and Chemicals Ltd.) was added to 400 parts of the obtained reaction solution, and the resultant solution was charged to an autoclave made of stainless steel. The inside of the autoclave was purged with hydrogen gas, hydrogen was supplied such that the pressure inside of the autoclave was held at 4.5 MPa, and a hydrogenation reaction was performed at 160°C for 6 hours. Next, a pressurized filter (FUNDA Filter produced by IHI Corporation) with Radiolite #800 as a filter bed was used to perform pressurized filtration at a pressure of 0.25 MPa to yield a colorless transparent solution from which the catalyst had been removed. This hydrogenation reaction solution was poured into a mixed solution of 250 parts of acetone and 250 parts of isopropanol under stirring, the hydrogenated product was caused to sediment, and then the hydrogenated product was filtered off and collected. The collected hydrogenated product was further washed with 200 parts of acetone, and was subsequently dried for 24 hours in a 100°C vacuum dryer that had been depressurized to 1 mmHg or lower. The yield of the hydrogenated product was 99%. This hydrogenated product had an Mw of 91,000, Mw/Mn of 1.27, and Tg of 125°C. The obtained hydrogenated product is also referred to below as "HPSt".

A twin-screw kneader (TEM-35B produced by Toshiba Machine Co., Ltd.; screw diameter: 37 mm; L/D = 32; screw rotation speed: 250 rpm; resin temperature: 230°C; feed rate: 10 kg/hr) was used to knead and extrude 0.40 parts of pentaerythritol tetrakis[3-(3,5-di-t-butyl-4-hydroxyphenyl)propionate] (produced by BASF Corporation; product name: Irganox^{®} 1010) as a hindered phenol antioxidant with 100 parts of HPSt obtained as described above and to obtain a pelletized resin composition. The resultant pellets were heated and dried at 80°C for 4 hours to obtain a polymer Z.

### (Example 1)

### <Production of resin composition>

After mixing 100 parts of the polymer X as a norbornene-based polymer and 10 parts of boehmite (BMF-520 produced by Kawai Lime Industry Co., Ltd.; average aspect ratio: 20; average particle diameter: 8 µm) as a plate-like filler, this mixture was kneaded under conditions of 260°C and 150 rpm using a kneader (produced by Shibaura Machine Co., Ltd.; product name: TEM-37), and a pelletized resin composition was obtained.

Note that in the examples and comparative examples, the properties (average aspect ratio, average particle diameter, etc.) of each type of filler in a resin composition were the same as the properties thereof at the time of charging.

### <Production of shaped product>

The pelletized resin composition was heated and dried at 80°C for 4 hours, was then loaded into an injection molding machine (produced by FANUC Corporation; product name: ROBOSHOT α-100B), and was injection molded at a cylinder temperature of 270°C and a mold temperature of 135°C to obtain a shaped product having a flat plate shape of 90 mm × 55 mm × 5 mm. The linear expansion coefficient, water absorption, presence of weld formation, and arithmetic surface roughness Ra were measured or evaluated for this shaped product. The results are shown in Table 1.

### (Examples 2 and 6)

A resin composition and a shaped product were prepared and various evaluations were performed in the same way as in Example 1 with the exception that in production of the resin composition, the amount of boehmite was changed from 10 parts to 60 parts (Example 2) or 45 parts (Example 6). The results are shown in Table 1.

### (Example 3)

A resin composition and a shaped product were prepared and various evaluations were performed in the same way as in Example 1 with the exception that in production of the resin composition, 45 parts of mica (NK-20G produced by Nihon Koken Kogyo Co., Ltd.; average aspect ratio: 75; average particle diameter: 20 µm) was used instead of 10 parts of boehmite as a plate-like filler. The results are shown in Table 1.

### (Example 4)

A resin composition and a shaped product were prepared and various evaluations were performed in the same way as in Example 1 with the exception that in production of the resin composition, 45 parts of mica (NK-10G produced by Nihon Koken Kogyo Co., Ltd.; aspect ratio: 55; average particle diameter: 10 µm) was used instead of 10 parts of boehmite as a plate-like filler. The results are shown in Table 1.

### (Example 5)

A shaped product was prepared and various evaluations were performed in the same way as in Example 1 with the exception that a resin composition produced as described below was used. The results are shown in Table 1.

### <Production of resin composition>

After mixing 100 parts of the polymer Y as a norbornene-based polymer and 45 parts of boehmite (BMF-520 produced by Kawai Lime Industry Co., Ltd.; average aspect ratio: 20; average particle diameter: 8 µm) as a plate-like filler, this mixture was kneaded under conditions of 260°C and 150 rpm using a kneader (produced by Shibaura Machine Co., Ltd.; product name: TEM-37), and a pelletized resin composition was obtained.

### (Example 7)

A shaped product was prepared and various evaluations were performed in the same way as in Example 1 with the exception that a resin composition produced as described below was used. The results are shown in Table 1.

### <Production of resin composition>

After mixing 100 parts of the polymer X as a norbornene-based polymer, 45 parts of boehmite (BMF-520 produced by Kawai Lime Industry Co., Ltd.; average aspect ratio: 20; average particle diameter: 8 µm) as a plate-like filler, and 0.6 parts of carbon black (CB #650 produced by Mitsubishi Chemical Corporation; average particle diameter: 0.022 µm) as a particulate filler, this mixture was kneaded under conditions of 260°C and 150 rpm using a kneader (produced by Shibaura Machine Co., Ltd.; product name: TEM-37), and a pelletized resin composition was obtained.

### (Example 8)

A resin composition and a shaped product were prepared and various evaluations were performed in the same way as in Example 7 with the exception that in production of the resin composition, the amount of carbon black was changed from 0.6 parts to 0.3 parts. The results are shown in Table 1.

### (Example 9)

A resin composition and a shaped product were prepared and various evaluations were performed in the same way as in Example 1 with the exception that in production of the resin composition, 45 parts of boehmite "BMT" (produced by Kawai Lime Industry Co., Ltd.; average aspect ratio: 15; average particle diameter: 3 µm) was used instead of 10 parts of boehmite "BMF-520" (produced by Kawai Lime Industry Co., Ltd.). The results are shown in Table 1.

### (Example 10)

A resin composition and a shaped product were prepared and various evaluations were performed in the same way as in Example 8 with the exception that in production of the resin composition, the amount of boehmite was changed from 45 parts to 60 parts. The results are shown in Table 1.

### (Example 11)

A resin composition and a shaped product were prepared and various evaluations were performed in the same way as in Example 8 with the exception that in production of the resin composition, the amount of boehmite was changed from 45 parts to 10 parts, and the amount of carbon black was changed from 0.3 parts to 0.05 parts. The results are shown in Table 1.

### (Example 12)

A pelletized resin composition was prepared in the same way as in Example 6. The obtained resin composition was heated and dried at 80°C for 4 hours, a shaped product was then produced under the following conditions, and various evaluations were performed. Heat and cool molding was performed through mold temperature control such that heating was performed at 170°C until loading was complete, and rapid cooling was subsequently performed to 140°C. The results are shown in Table 1.

### <<Production conditions>>

Injection molding machine: J-450ADS (product name) produced by The Japan Steel Works, Ltd.
Cylinder temperature: 270°C
Mold temperature: 170°C at high temperature and 140°C at low temperature
Heated steam-type heat & cool device: USCOOL (product name) produced by ITOS Inc.

### (Comparative Example 1)

A resin composition and a shaped product were prepared and various evaluations were performed in the same way as in Example 1 with the exception that boehmite was not used in production of the resin composition. The results are shown in Table 2.

### (Comparative Example 2)

A resin composition and a shaped product were prepared and various evaluations were performed in the same way as in Example 1 with the exception that in production of the resin composition, 45 parts of boehmite "BMM" (produced by Kawai Lime Industry Co., Ltd.; average aspect ratio: 10; average particle diameter: 1 µm; plate-like filler not included) was used instead of 10 parts of boehmite "BMF-520" (produced by Kawai Lime Industry Co., Ltd.). The results are shown in Table 2.

### (Comparative Example 3)

A resin composition and a shaped product were prepared and various evaluations were performed in the same way as in Example 1 with the exception that in production of the resin composition, 45 parts of boehmite "BMB-03" (produced by Kawai Lime Industry Co., Ltd.; average aspect ratio: 2; average particle diameter: 1 µm; plate-like filler not included) was used instead of 10 parts of boehmite "BMF-520" (produced by Kawai Lime Industry Co., Ltd.). The results are shown in Table 2.

### (Comparative Example 4)

A resin composition and a shaped product were prepared and various evaluations were performed in the same way as in Example 1 with the exception that in production of the resin composition, 45 parts of boehmite "BMI" (produced by Kawai Lime Industry Co., Ltd.; average aspect ratio: 40; average particle diameter: 4 µm; plate-like filler not included), which is a needle-like filler, was used instead of 10 parts of boehmite "BMF-520" (produced by Kawai Lime Industry Co., Ltd.). The results are shown in Table 2.

Note that the "average aspect ratio" of the needle-like filler is a value that was obtained by observing individual needles of the filler by the same procedure as in "Average particle diameter of particulate filler", calculating the aspect ratio as a ratio of length relative to width of the needle shape for 50 randomly selected needles, and determining an arithmetic mean value of these aspect ratios.

### (Comparative Example 5)

### <Production of resin composition>

After mixing 100 parts of the polymer Z and 45 parts of boehmite (BMF-520 produced by Kawai Lime Industry Co., Ltd.; average aspect ratio: 20; average particle diameter: 8 µm) as a plate-like filler, this mixture was kneaded under conditions of 250°C and 150 rpm using a kneader (produced by Shibaura Machine Co., Ltd.; product name: TEM-37), and a pelletized resin composition was obtained.

### <Production of shaped product>

The pelletized resin composition was heated and dried at 80°C for 4 hours, was then loaded into an injection molding machine (produced by FANUC Corporation; product name: ROBOSHOT α-100B), and was injection molded at a cylinder temperature of 260°C and a mold temperature of 135°C to obtain a shaped product having a flat plate shape of 90 mm × 55 mm × 5 mm. The linear expansion coefficient, water absorption, presence of weld formation, and arithmetic surface roughness Ra were measured or evaluated for this shaped product. The results are shown in Table 2.

In Tables 1 and 2, shown below:
"Particle diameter ratio of particulate/plate-like" indicates ratio of average particle diameter of particulate filler relative to average particle diameter of plate-like filler;
"MD" indicates MD linear expansion coefficient;
"TD" indicates TD linear expansion coefficient;
"MD/TD" indicates ratio of MD linear expansion coefficient relative to TD linear expansion coefficient; and
"≤ 0.01" indicates 0.01 mass% or less.

Moreover, "MD/TD" in Tables 1 and 2 is presented as a value where the second decimal place has been rounded.

**[Table 1]**

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Resin composition | Polymer | Type | Polymer X | Polymer X | Polymer X | Polymer X | Polymer Y | Polymer X | Polymer X | Polymer X | Polymer X | Polymer X | Polymer X | Polymer X |
| | | Amount [parts by mass] | 100 | 100 | 100 | 100 | 100 | 100 | 100 | 100 | 100 | 100 | 100 | 100 |
| | Plate-like filler | Type | BMF-520 | BMF-520 | NK-20G | NK-10G | BMF-520 | BMF-520 | BMF-520 | BMF-520 | BMT | BMF-520 | BMF-520 | BMF-520 |
| | | | Boehmite | Boehmite | Mica | Mica | Boehmite | Boehmite | Boehmite | Boehmite | Boehmite | Boehmite | Boehmite | Boehmite |
| | | Average aspect ratio [-] | 20 | 20 | 75 | 55 | 20 | 20 | 20 | 20 | 15 | 20 | 20 | 20 |
| | | Average particle diameter [µm] | 8 | 8 | 20 | 10 | 8 | 8 | 8 | 8 | 3 | 8 | 8 | 8 |
| | | Amount [parts by mass] | 10 | 60 | 45 | 45 | 45 | 45 | 45 | 45 | 45 | 60 | 10 | 45 |
| | Particulate filler | Type | - | - | - | - | - | - | CB #650 | CB #650 | - | CB #650 | CB #650 | - |
| | | | - | - | - | - | - | - | Carbon black | Carbon black | - | Carbon black | Carbon black | - |
| | | Average particle diameter [µm] | - | - | - | - | - | - | 0.022 | 0.022 | - | 0.022 | 0.022 | - |
| | | Amount [parts by mass] | - | - | - | - | - | - | 0.6 | 0.3 | - | 0.3 | 0.05 | - |
| | Particle diameter ratio of particulate/plate-like | | - | - | - | - | - | - | 0.00275 | 0.00275 | - | 0.00275 | 0.00275 | - |
| | Filler (other than plate-like and particulate) | Type | - | - | - | - | - | - | - | - | - | - | - | - |
| | | | - | - | - | - | - | - | - | - | - | - | - | - |
| | | Average aspect ratio [-] | - | - | - | - | - | - | - | - | - | - | - | - |
| | | Average particle diameter [µm] | - | - | - | - | - | - | - | - | - | - | - | - |
| | | Amount [parts by mass | - | - | - | - | - | - | - | - | - | - | - | - |
| Thermal dimensional stability | | MD [ppm/K] | 37 | 22 | 31 | 36 | 28 | 24 | 31 | 30 | 38 | 24 | 38 | 26 |
| | | TD [ppm/K] | 39 | 25 | 32 | 37 | 30 | 25 | 32 | 31 | 39 | 25 | 39 | 27 |
| MD/TD [-] | | | 0.9 | 0.9 | 1.0 | 1.0 | 0.9 | 1.0 | 1.0 | 1.0 | 1.0 | 1.0 | 1.0 | 1.0 |
| Arithmetic surface roughness Ra | | | A | A | A | A | A | A | A | A | A | A | A | A+ |
| Water absorption [mass%] | | | ≤ 0.01 | ≤ 0.01 | ≤ 0.01 | ≤ 0.01 | ≤ 0.01 | ≤ 0.01 | ≤ 0.01 | ≤ 0.01 | ≤ 0.01 | ≤ 0.01 | ≤ 0.01 | ≤ 0.01 |
| Weld formation | | | No | Yes | No | No | No | No | No | No | No | No | No | No |

**[Table 2]**

| | | | Comparative Example 1 | Comparative Example 2 | Comparative Example 3 | Comparative Example 4 | Comparative Example 5 |
|---|---|---|---|---|---|---|---|
| Resin composition | Polymer | Type | Polymer X | Polymer X | Polymer X | Polymer X | Polymer Z |
| | | Amount [parts by mass] | 100 | 100 | 100 | 100 | 100 |
| | Plate-like filler | Type | - | - | - | - | BMF-520 |
| | | | - | - | - | - | Boehmite |
| | | Average aspect ratio [-] | - | - | - | - | 20 |
| | | Average particle diameter [µm] | - | - | - | - | 8 |
| | | Amount [parts by mass] | - | - | - | - | 45 |
| | Particulate filler | Type | - | - | - | - | - |
| | | | - | - | - | - | - |
| | | Average particle diameter µm] | - | - | - | - | - |
| | | Amount [parts by mass] | - | - | - | - | - |
| | Particle diameter ratio of particulate/plate⁻like | | - | - | - | - | - |
| | Filler (other than plate-like and particulate) | Type | - | BMM | BMB-03 | BMI | - |
| | | | - | Boehmite | Boehmite | Boehmite | - |
| | | Average aspect ratio [-] | - | 10 | 2 | 40 | - |
| | | Average particle diameter [µm] | - | 1 | 1 | 4 | - |
| | | Amount [parts by mass] | - | 45 | 45 | 45 | - |
| Thermal dimensional stability | | MD [ppm/K] | 58 | 45 | 52 | 35 | 53 |
| | | TD [ppm/K] | 59 | 49 | 54 | 53 | 55 |
| MD/TD [-] | | | 1.0 | 0.9 | 1.0 | 0.7 | 0.96 |
| Arithmetic surface roughness Ra | | | A+ | A | A | A | A |
| Water absorption [mass%] | | | ≤ 0.01 | ≤ 0.01 | ≤ 0.01 | ≤ 0.01 | ≤ 0.01 |
| Weld formation | | | No | No | No | No | No |

It can be seen from Tables 1 and 2 that a shaped product having excellent thermal dimensional stability could be produced in Examples 1 to 12 in which a resin composition that contains a norbornene-based polymer and a plate-like filler was used.

### INDUSTRIAL APPLICABILITY

According to the present disclosure, it is possible to provide a resin composition that can form a shaped product having excellent thermal dimensional stability. Moreover, according to the present disclosure, it is possible to provide a shaped product that has excellent thermal dimensional stability.

## Claims

1. A resin composition comprising: a polymer including a structural unit derived from a norbornene-based monomer; and a plate-like filler.

2. The resin composition according to claim 1, wherein the plate-like filler is at least one of boehmite and mica.

3. The resin composition according to claim 1, wherein the plate-like filler is boehmite.

4. The resin composition according to claim 1, wherein content of the plate-like filler is not less than 10 parts by mass and not more than 60 parts by mass per 100 parts by mass of the polymer.

5. The resin composition according to claim 1, further comprising a particulate filler.

6. The resin composition according to claim 5, wherein a ratio of an average particle diameter of the particulate filler relative to an average particle diameter of the plate-like filler is 1/10 or less.

7. A shaped product obtained through shaping of the resin composition according to any one of claims 1 to 6.

8. The shaped product according to claim 7, wherein an MD linear expansion coefficient and a TD linear expansion coefficient of the shaped product are each 40 ppm/K or less.

9. The shaped product according to claim 7, wherein a ratio of an MD linear expansion coefficient relative to a TD linear expansion coefficient of the shaped product is not less than 0.8 and not more than 1.2.

10. The shaped product according to claim 7, wherein water absorption of the shaped product after 24 hours of immersion in 23°C water as measured in accordance with ASTM D570 is 0.05 mass% or less.

11. The shaped product according to claim 7, wherein the shaped product has an arithmetic surface roughness Ra of 10 nm or less.

12. The shaped product according to claim 7, wherein the shaped product is for a mirror.
